# FASCICULE DE BREVET EUROPEEN

(11) **EP 1 788 516 B1**
(45) Date de publication et mention de la délivrance du brevet: **06.04.2016**
(21) Numéro de dépôt: 06022617.2
(22) Date de dépôt: 30.10.2006
(51) Int. Cl.: G06K 19/10, G07G 1/00, G07F 7/12, G06Q 30/00, G07F 7/08

(54) **Procédé et dispositif d'authentification et d'identification**
Verfahren und Vorrichtung zur Authentifizierung und Identifizierung
Method and device for authentication and identification

(43) Date de publication de la demande: 23.05.2007
(73) Titulaire: ATT- Advanced Track & Trace S. A., 92500 Rueil- Malmaison (FR)
(72) Inventeur: Sagan, Zbignieur ATT - Advanced Track & Trace S.A., 92500 Rueil-Malmaison (FR); Foucou, Alain ATT - Advanced Track & Trace S.A., 92500 Rueil-Malmaison (FR); Massicot, Jean-Pierre ATT - Advanced, 92500 Rueil-Malmaison (FR)
(74) Mandataire: Cornuejols, Georges

(56) Documents cités:
- EP-A- 0 640 946
- EP-A- 0 710 934
- EP-A- 1 548 641
- DE-A1- 10 019 721
- DE-A1- 10 100 248
- DE-A1- 10 124 442
- FR-A- 2 800 220
- US-B1- 6 226 619

## Description

La présente invention concerne un procédé et un dispositif d'authentification et/ou d'identification. Elle s'applique, en particulier, à la protection contre la contrefaçon des marques, des signes distinctifs et des produits les portant.

On connaît des systèmes de codage utilisant des techniques de stéganographie (en anglais « watermarking ») qui permettent de dissimuler, dans une image, des informations de vérification de droit d'auteur afin de détecter une reproduction illicite de l'image. Pour des raisons économiques, les informations codées sont les mêmes pour toutes les copies licites de l'image. Ces copies ne peuvent donc pas être identifiées ou individualisées.

On connaît aussi des systèmes de marquage en ligne de production, par exemple à imprimantes à jet d'encre qui permettent d'individualiser et de dater des produits portant les marques ou signes distinctifs à défendre.

Dans ces deux cas, une copie de l'image ou de la marque permet de reproduire les éléments d'authentification et ne protège donc pas contre une contrefaçon par copie servile.

Le document DE 100 19 721 décrit un système pour vérifier l'authenticité et l'intégrité de produits. Il comprend au moins un produit et au moins un emballage, dans lequel le produit présente un premier marquage et l'emballage présente un second marquage. Ces marquages possèdent une relation donnée si bien qu'en vérifiant ces marquages, une conclusion sur l'identité du produit et de l'emballage ou une conclusion concernant leur authenticité peuvent être obtenues.

Le document DE 101 00 248 décrit un procédé pour l'identification de paquets, en particulier des paquets de cigarettes, qui donne à chaque paquet un code caractéristique pendant la production. Chaque machine d'une unité de finition ou d'emballage reçoit une clé périodiquement variable pour fixer des codes à apposer.

La présente invention vise à remédier à ces inconvénients. A cet effet, la présente invention vise, selon un premier aspect, un procédé d'authentification de produits d'un ensemble de produits, qui comporte, pour chaque produit dudit ensemble :
- une étape de marquage dudit produit pour produire une marque (205, 225, 245) représentative d'un premier contenu et présentant des défauts d'impression, et
- une étape d'association d'un support d'information audit produit, ledit support d'information supportant une information représentative, d'une part, du premier contenu et, d'autre part, d'une clé,
la clé étant spécifiquement attribuée audit produit dans ledit ensemble de produits, l'étape d'association comportant une étape de lecture, avec une caméra, de la marque comportant des défauts d'impression produite au cours de l'étape de marquage,
le procédé comportant, de plus, une étape de codage de ladite marque lue comportant des défauts d'impression, avec ladite clé, ladite information représentative étant, en conséquence, différente pour chaque produit dudit ensemble.

Grâce à ces dispositions, l'information, différente pour chaque produit, permet d'assurer la traçabilité du produit dont l'étiquette pourrait avoir été copiée. De plus, le support d'information rend accessible de l'information même si la marque a été détériorée par sa copie. Enfin, la réimportation de produits licitement mis en vente, en parallèle du réseau commercial autorisé, peut être détectée et son origine peut être déterminée grâce à la traçabilité du produit.

Ainsi, un niveau supplémentaire de sécurité est apporté par le lien, ou la corrélation, entre le contenu de la marque et l'information supportée par le support d'information authentifiant la marque et les rendant indissociables.

Selon des caractéristiques particulières, au cours de l'étape de marquage, la marque produite comporte des codes de correction d'erreur pour mesurer le nombre de copies dont ladite marque est issue en mesurant la consommation desdits codes de correction d'erreur.

Grâce à ces dispositions, on peut mesurer la consommation de codes de correction d'erreur nécessaire pour lire la marque, ce qui est un indicateur du nombre de copies effectuées, tout en pouvant accéder à l'information initialement contenue par ladite marque.

Selon des caractéristiques particulières, le procédé tel que succinctement exposé ci-dessus comporte une étape de codage préliminaire à l'étape de marquage, étape de codage au cours de laquelle on code un message représentatif du produit dans ledit premier contenu.

Grâce à ces dispositions, la marque représentative du premier contenu peut être lue et une information peut être décodée, par les propriétaires légitimes de cette marque, afin de déterminer l'origine ou le chemin suivi par le produit (vérification d'authenticité et traçabilité).

Selon des caractéristiques particulières, au cours de l'étape de marquage, on constitue des points ou des traits en contraste sur leur fond, lesdits points étant représentatifs du premier contenu.

Grâce à ces dispositions, la copie de la marque peut être détectée car, en cas de copie, la dimension des points ou des traits ou leur contraste avec le fond est modifié et la copie peut ainsi être détectée.

Selon des caractéristiques particulières, au cours de l'étape de marquage, on constitue des points ou des traits sur une surface présente sur ledit produit. Grâce à ces dispositions, on peut accéder et lire la marque en n'examinant que ladite surface.

Selon des caractéristiques particulières, au cours de l'étape de marquage, on constitue des points sur une ligne de séparation d'un graphisme présent sur ledit produit.

Grâce à ces dispositions, les points n'ont pas besoin d'être rassemblés dans une zone qui pourrait être disgracieuse.

Selon des caractéristiques particulières, au cours de l'étape d'association d'un support d'information, on associe un code à barres audit produit. Grâce à ces dispositions, les nombreux dispositifs de lecture de code à barres peuvent être utilisés pour lire le support d'information.

Selon des caractéristiques particulières, au cours de l'étape d'association d'un support d'information, on associe des caractères alphanumériques audit produit. Grâce à ces dispositions, la lecture du support d'information peut être effectuée automatiquement, par exemple avec un dispositif de reconnaissance optique de caractères (en anglais OCR pour optical character récognition) ou à l'oeil nu.

Selon des caractéristiques particulières, au cours de l'étape d'association d'un support d'information, on associe un code à barres en au moins deux dimensions audit produit. Grâce à ces dispositions, la quantité d'information que l'on peut inscrire dans une surface donnée est augmentée par rapport au cas du code à barres classique en une dimension.

Selon des caractéristiques particulières, au cours de l'étape d'association d'un support d'information, on associe une étiquette électronique audit produit. Grâce à ces dispositions, la lecture du support d'information peut être effectuée à distance et lorsque le support est masqué par d'autres produits ou emballages.

Selon des caractéristiques particulières, au cours de l'étape d'association, on effectue une impression par jet d'encre. Grâce à ces dispositions, les supports d'information peuvent être individualisés et uniques, pour chaque produit ou groupe de produits.

Selon des caractéristiques particulières, au cours de l'étape d'association, on effectue une impression par impact de laser. Grâce à ces dispositions, les supports d'information peuvent être individualisés et uniques pour chaque produit ou groupe de produits et, de plus, ils peuvent être de dimension très réduite, par exemple inférieure au millimètre carré.

Selon des caractéristiques particulières, l'étape d'association comporte une étape de codage du premier contenu avec une clé unique spécifique audit produit, chaque information associée au cours d'une étape d'association étant, en conséquence, différente. Grâce à ces dispositions, chaque produit peut être identifié et reconnu.

Selon un deuxième aspect, la présente invention vise un dispositif d'authentification de produits d'un ensemble de produits, qui comporte :
- un moyen de marquage de chaque produit pour produire une marque représentative d'un premier contenu et présentant des défauts d'impression, et
- un moyen d'association d'un support d'information audit produit, ledit support d'information supportant une information représentative, d'une part, du premier contenu et, d'autre part, d'une clé,
la clé étant spécifiquement attribuée audit produit dans ledit ensemble de produits, le moyen d'association comportant un moyen de lecture, avec une caméra, de la marque comportant des défauts d'impression produite par le moyen de marquage, le dispositif comportant un moyen de codage de ladite marque lue comportant des défauts d'impression, avec ladite clé, ladite information représentative étant, en conséquence, différente pour chaque produit dudit ensemble.

Selon des caractéristiques particulières, le moyen de marquage est configuré pour que la marque produite comporte des codes de correction d'erreur pour mesurer le nombre de copies dont ladite marque est issue en mesurant la consommation desdits codes de correction d'erreur.

Les avantages, buts et caractéristiques du dispositif objet du deuxième aspect de la présente invention étant similaires à ceux du procédé objet du premier aspect, ils ne sont pas rappelés ici.

Dans ces deux cas, une copie de l'image ou de la marque permet de reproduire les éléments d'authentification et ne protège donc pas contre une contrefaçon par copie servile.

D'autres avantages, buts et caractéristiques de la présente invention ressortiront de la description qui va suivre, faite, dans un but explicatif et nullement limitatif en regard des dessins annexés dans lesquels :
- la figure 1 représente, schématiquement, un premier mode de réalisation d'un dispositif d'authentification objet de la présente invention,
- la figure 2 représente, schématiquement, un emballage de produit obtenu par la mise en oeuvre d'un mode de réalisation particulier du procédé objet de la présente invention et
- la figure 3 représente, sous forme d'un logigramme, un mode de réalisation particulier du procédé objet de la présente invention.

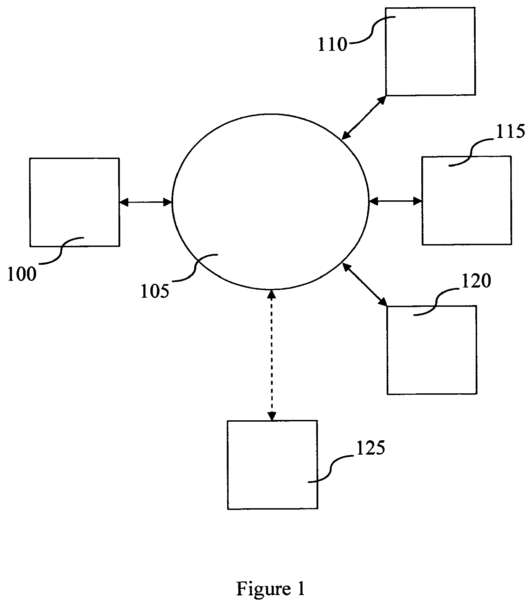

On observe, en figure 1, un serveur de génération de codes 100, un réseau informatique 105, un serveur de titulaire des droits 110, un serveur de production locale 115, un serveur de production client 120 et un dispositif de lecture d'information 125.

Le réseau informatique 105 est un réseau permettant la communication sécurisée, à longue distance, entre des serveurs munis des outils de sécurité nécessaires. Par exemple, le réseau informatique 105 est le réseau Internet et les protocoles mis en oeuvre comportent le protocole « https » (acronyme de hypertext transfer protocol secured pour protocole sécurisé de transfert hypertexte), utilisant de la cryptographie.

Le serveur de génération 100 est adapté à générer des codes dont la complexité les rend invulnérables au décodage. Par exemple, ces codes mettent en oeuvre des bi-clés conformes à l'infrastructure à clés publiques PKI (pour public key infrastructure). Ces codes sont fournis, à la demande, aux serveurs de titulaires des droits abonnés tels que le serveur 110. Les codes fournis représentent un premier contenu, dont une partie, au moins est préférentiellement fournie par le serveur 110. Par exemple, un code peut représenter le nom du titulaire des droits, une référence de produit à marquer et/ou une date de génération du code.

Préférentiellement, les codes produits comportent des codes de correction d'erreur, par exemple de type connu sous le nom de « CRC ».

Le serveur de titulaire des droits 110 est adapté à générer, à partir des codes fournis par le serveur 100, des marques représentatives de ces codes dont la copie est détectable. Par exemple, ces marques sont incorporées dans une forme géométrique, par exemple un rectangle, sous la forme de points ou de traits contrastés et de dimensions très réduites, par exemple blancs sur fond noir, dont la position est représentative du premier contenu. Selon un autre exemple, ces marques sont des points positionnés au bord d'une ligne de séparation d'un graphisme, par exemple un logo, les positions des points étant représentatives du premier contenu. Selon un autre exemple, ces marques sont des points ou des traits éparpillés sur la surface de l'emballage ou de l'étiquette du produit, les positions des points ou des traits étant représentatives du premier contenu.

Préférentiellement, les marques produites comportent des codes de correction d'erreur, par exemple de type connu sous le nom de « CRC ».

Le serveur de production locale 115 est adapté à recevoir la marque représentative du premier contenu de la part du serveur du titulaire des droits 110. Le serveur de production locale est adapté à intégrer cette marque dans le modèle de fabrication d'un produit, d'un emballage ou d'une étiquette. Par exemple, des graphistes mettent en oeuvre le serveur de production locale ou un système informatique y donnant accès pour effectuer, avec un logiciel de dessin assisté par ordinateur ou de conception assistée par ordinateur, la maquette d'un produit, d'une étiquette ou d'un emballage de produit.

Le serveur de production locale 115 est aussi adapté à fournir des informations variables à imprimer ou marquer sur lesdits produits, emballages ou étiquettes. Ces informations variables sont destinées à identifier un produit ou un lot de produits et à être associées au produit en cours de fabrication. Ces informations variables représentent, d'une part, le premier contenu et, d'autre part, une clé de codage fournie soit par le serveur 100, soit par le serveur 110, soit par le serveur 115.

Le serveur de production client 120 est adapté à recevoir cette maquette et à contrôler une chaîne de production des étiquettes et/ou emballages comportant un moyen d'impression de la marque représentative du premier contenu et un moyen d'association d'un support d'information représentatif des informations variables. Préférentiellement, le serveur 120 met en oeuvre une information complémentaire représentative du lieu de production, de l'ordre de fabrication et/ou de la date de production.

Le serveur de production client 120 est ainsi adapté à effectuer, pour chaque produit d'un ensemble de produits :
- une étape de marquage dudit produit pour produire une marque représentative d'un premier contenu et
- une étape d'association d'un support d'information audit produit, ledit support d'information supportant une information représentative, d'une part, du premier contenu et, d'autre part, d'une clé spécifiquement attribuée audit produit dans ledit ensemble de produits, ladite information représentative étant, en conséquence, différente pour chaque produit dudit ensemble.

On observe que le support d'information peut prendre plusieurs formes. Selon un premier exemple, le support d'information est un code à barres associé au produit. Selon un deuxième exemple, le support d'information est un ensemble de caractères alphanumériques associé au produit. Selon un troisième exemple, le support d'information est un code à barres en au moins deux dimensions ou une matrice de données, connue sous le nom de datamatrix, associé au produit. Selon un quatrième exemple, le support d'information est une étiquette électronique, par exemple de type RFID (acronyme de RadioFrequence Identification) associée au produit. Selon d'autres exemples, le support d'informations supporte des traceurs biologiques et/ou des traceurs nanométriques

Le support d'information peut être imprimé par une imprimante à jet d'encre ou peut être formé, dans la matière du produit ou de l'emballage, par impact d'un faisceau laser pulsé, par exemple un faisceau laser.

Dans des modes de réalisation particuliers, on effectue la lecture, par exemple par l'intermédiaire d'une caméra, de la marque représentative du premier contenu et, en fonction de l'information lue, on modifie, par exemple par codage, l'information portée par le support d'information associé au produit.

Préférentiellement, pour générer l'information conservée par le support d'information associé au produit, on effectue un codage du premier contenu avec une clé unique spécifique au produit, chaque information associée au cours d'une étape d'association étant, en conséquence, différente.

Le dispositif de lecture 125 est adapté à lire, d'une part, la marque portée par un produit et, d'autre part, le support d'information. Par exemple, il comporte une caméra et un objectif permettant de prendre une image d'une partie du produit ou de son emballage qui porte la marque considérée. De manière autonome ou en coopération avec le serveur 100, le dispositif de lecture est adapté à extraire le contenu de l'image pour fournir un premier contenu. Le dispositif de lecture 125 est aussi adapté à lire l'information supportée par un support d'information associé audit produit, par l'intermédiaire d'une caméra et/ou d'un lecteur d'étiquettes électroniques. De manière autonome ou en coopération avec le serveur 115, le dispositif de lecture 125 effectue le décodage de l'information supportée par le support d'information pour fournir un deuxième contenu. Enfin, le dispositif de lecture 125 effectue une détection d'incohérence entre le premier contenu et le deuxième contenu pour déterminer si le produit est authentique, pour des besoins d'authentification, ou pour en déterminer le trajet, pour des besoins de traçabilité.

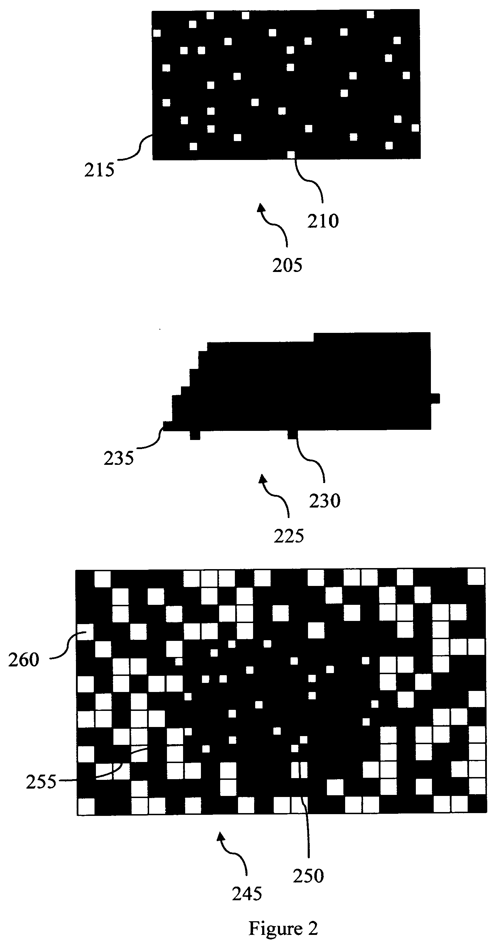

Dans la figure 2, on observe trois formes de marques 205, 225 et 245. Dans la marque 205, des points blancs 210 sont positionnés dans un rectangle noir 215 et leurs positions dépendent du premier contenu, y compris, éventuellement de codes de correction d'erreurs.

Dans la marque 225, des points noirs 230 sont positionnés en bordure d'un graphisme 235, ici un logo, en des positions qui dépendent du premier contenu, y compris, éventuellement de codes de correction d'erreurs.

Dans la marque 245, des points blancs 250 sont positionnés dans un rectangle noir 255 et leurs positions dépendent du premier contenu, y compris, éventuellement de codes de correction d'erreurs. Le rectangle 255 est, de plus, entouré d'un code matriciel 260, connu sous le nom de datamatrix.

On observe que, dans l'objectif de lier le code matriciel et un authentifiant, il est intéressant de disposer d'octets supplémentaires (créer un champ supplémentaire) dans le code datamatrix afin d'y stocker un code de contrôle généré à partir du contenu de la marque centrale et, éventuellement, d'y ajouter un code variable pour individualiser le produit.

On observe que, conformément à la présente invention, on peut mettre en oeuvre des traits ou des combinaisons de points et de traits pour constituer la marque ou le support d'informations associé.

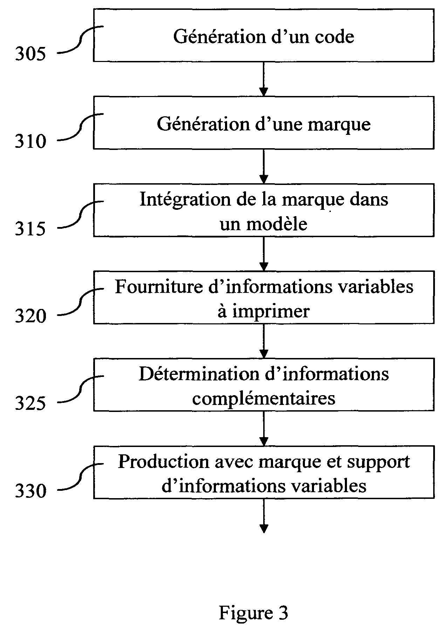

On observe, en figure 3, une étape 305 de génération d'un code dont la complexité le rend invulnérable au décodage. Par exemple, ce code met en oeuvre une clé d'un bi-clés conforme à l'infrastructure à clés publiques PKI (pour public key infrastructure). Par exemple, un code peut représenter le nom du titulaire des droits, une référence de produit à marquer et une date de génération du code. Préférentiellement, les codes produits comportent des codes de correction d'erreur, par exemple de type connu sous le nom de « CRC ».

Au cours d'une étape 310, on génère, à partir du code fournis au cours de l'étape 305, une marque représentative de ce code dont la copie est détectable. Préférentiellement, la marque produite comporte des codes de correction d'erreur, par exemple de type connu sous le nom de « CRC ».

Au cours d'une étape 315, on intègre cette marque dans le modèle de fabrication d'un emballage ou d'une étiquette.

Au cours d'une étape 320, on fournit des informations variables à imprimer sur lesdites étiquettes ou emballages. Ces informations variables sont destinées à identifier un produit ou un lot de produits et à être associées au produit en cours de fabrication. Ces informations variables représentent, d'une part, le premier contenu et, d'autre part, une clé de codage.

Au cours d'une étape 325, on détermine une information complémentaire représentative du lieu de production, de l'ordre de fabrication et/ou de la date de production.

Au cours d'une étape 330, on effectue la production des étiquettes et/ou emballages, en imprimant la marque représentative du premier contenu et en associant un support d'information représentatif des informations variables.
En variante, la marque est rendue invisible par le choix d'un procédé de fabrication particulier, par exemple modifiant localement le coefficient de réflexion de l'étiquette ou de l'emballage ou mettant en oeuvre une encre invisible de type connu.

En variante, la marque est copiée en plusieurs parties de l'emballage.

## Revendications

1. Procédé d'authentification de produits d'un ensemble de produits, qui comporte, pour chaque produit dudit ensemble :
- une étape (330) de marquage dudit produit pour produire une marque (205, 225, 245) représentative d'un premier contenu et présentant des défauts d'impression, et
- une étape (330) d'association d'un support d'information audit produit, ledit support d'information supportant une information représentative, d'une part, du premier contenu et, d'autre part, d'une clé
**caractérisé en ce que** la clé est spécifiquement attribuée audit produit dans ledit ensemble de produits, l'étape d'association comportant une étape de lecture, avec une caméra, de la marque comportant des défauts d'impression produite au cours de l'étape de marquage,
et **en ce qu'**il comporte, de plus, une étape de codage de ladite marque lue comportant des défauts d'impression, avec ladite clé, ladite information représentative étant, en conséquence, différente pour chaque produit dudit ensemble.

2. Procédé selon la revendication 1, dans lequel, au cours de l'étape (330) de marquage, la marque produite comporte des codes de correction d'erreur pour mesurer le nombre de copies dont ladite marque est issue en mesurant la consommation desdits codes de correction d'erreur.

3. Procédé selon l'une des revendications 1 ou 2, qui comporte une étape (305) de codage préliminaire à l'étape (330) de marquage, étape de codage au cours de laquelle on code un message représentatif du produit dans ledit premier contenu.

4. Procédé selon l'une des revendications 1 à 3, dans lequel, au cours de l'étape (330) de marquage, on constitue des points (210, 230, 250) ou des traits en contraste sur leur fond, lesdits points ou traits étant représentatifs du premier contenu.

5. Procédé selon la revendication 4, dans lequel, au cours de l'étape (330) de marquage, on constitue des points (210, 250) ou des traits sur une surface présente sur ledit produit.

6. Procédé selon l'une des revendications 4 ou 5, dans lequel, au cours de l'étape (330) de marquage, on constitue des points (230) sur une ligne de séparation d'un graphisme présent sur ledit produit.

7. Procédé selon l'une des revendications 1 à 6, dans lequel, au cours de l'étape (330) d'association d'un support d'information, on associe un code à barres audit produit.

8. Procédé selon l'une des revendications 1 à 7, dans lequel, au cours de l'étape (330) d'association d'un support d'information, on associe des caractères alphanumériques audit produit.

9. Procédé selon l'une des revendications 1 à 8, dans lequel, au cours de l'étape (330) d'association d'un support d'information, on associe un code (260) à barres en au moins deux dimensions audit produit.

10. Procédé selon l'une des revendications 1 à 9, dans lequel, au cours de l'étape (330) d'association d'un support d'information, on associe une étiquette électronique audit produit.

11. Procédé selon l'une des revendications 1 à 10, dans lequel, au cours de l'étape (330) d'association, on effectue une impression par jet d'encre.

12. Procédé selon l'une des revendications 1 à 10, dans lequel, au cours de l'étape (330) d'association, on effectue une impression par impact de laser.

13. Procédé selon l'une des revendications 1 à 12, dans lequel l'étape (330) d'association comporte une étape de codage du premier contenu avec une clé unique spécifique audit produit, chaque information associée au cours d'une étape d'association étant, en conséquence, différente.

14. Dispositif d'authentification de produits d'un ensemble de produits, qui comporte :
- un moyen de marquage de chaque produit pour produire une marque représentative d'un premier contenu et présentant des défauts d'impression, et
- un moyen d'association d'un support d'information audit produit, ledit support d'information supportant une information représentative, d'une part, du premier contenu et, d'autre part, d'une clé,
**caractérisé en ce que** la clé est spécifiquement attribuée audit produit dans ledit ensemble de produits, le moyen d'association comportant un moyen de lecture, avec une caméra, de la marque comportant des défauts d'impression produite par le moyen de marquage,
et **en ce qu'**il comporte un moyen de codage de ladite marque lue comportant des défauts d'impression, avec ladite clé, ladite information représentative étant, en conséquence, différente pour chaque produit dudit ensemble.

15. Dispositif selon la revendication 14, dans lequel, le moyen de marquage est configuré pour que la marque produite comporte des codes de correction d'erreur pour mesurer le nombre de copies dont ladite marque est issue en mesurant la consommation desdits codes de correction d'erreur.

## Patentansprüche

1. Verfahren zum Authentisieren von Produkten aus einer Produktgruppe, das für jedes Produkt der besagten Gruppe folgendes umfasst:
- einen Schritt (330) zum Kennzeichnen des besagten Produkts zum Erzeugen einer für einen ersten Inhalt repräsentativen Kennzeichnung (205, 225, 245), die Druckfehler aufweist, und
- einen Schritt (330) zum Verbinden eines Informationsträgers mit dem besagten Produkt, wobei der besagte Informationsträger eine repräsentative Information einerseits über den ersten Inhalt und andererseits über einen Schlüssel trägt,
**dadurch gekennzeichnet, dass** der Schlüssel speziell dem besagten Produkt in der besagten Produktgruppe zugeordnet ist, wobei der Verbindungsschritt einen Schritt zum Lesen der Druckfehler umfassenden Kennzeichnung mit einer Kamera umfasst, die während des Schrittes zum Kennzeichnen erzeugt wurde,
und dadurch, dass es zusätzlich einen Schritt zum Codieren der besagten gelesenen Druckfehler umfassenden Kennzeichnung mit dem besagten Schlüssel umfasst, wobei die besagte repräsentative Information dementsprechend für jedes Produkt der besagten Gruppe unterschiedlich ist.

2. Verfahren nach Anspruch 1, wobei die während des Schrittes (330) zum Kennzeichnen erzeugte Kennzeichnung Fehlerkorrekturcodes umfasst, um die Anzahl der Kopien zu messen, aus denen die Kennzeichnung hervorgegangen ist, indem man den Verbrauch der besagten Fehlerkorrekturcodes misst.

3. Verfahren nach einem der Ansprüche 1 oder 2, das vor dem Schritt (330) zum Kennzeichnen einen Schritt (305) zum Codieren umfasst, wobei man während des Schrittes zum Codieren eine für das Produkt repräsentative Nachricht im besagten ersten Inhalt codiert.

4. Verfahren nach einem der Ansprüche 1 bis 3, wobei man während des Schrittes (330) zum Kennzeichnen Punkte (210, 230, 250) oder Striche bildet, die sich von deren Grund abheben, wobei die besagten Punkte oder Striche repräsentativ für den ersten Inhalt sind.

5. Verfahren nach Anspruch 4, wobei man während des Schrittes (330) zum Kennzeichnen Punkte (210, 250) oder Striche auf einer Oberfläche bildet, die auf dem besagten Produkt vorhanden ist.

6. Verfahren nach einem der Ansprüche 4 oder 5, wobei man während des Schrittes (330) zum Kennzeichnen Punkte (230) auf einer Trennlinie einer Grafik bildet, die auf dem besagten Produkt vorhanden ist.

7. Verfahren nach einem der Ansprüche 1 bis 6, wobei man während des Schrittes (330) zum Verbinden eines Informationsträgers einen Strichcode mit dem besagten Produkt verbindet.

8. Verfahren nach einem der Ansprüche 1 bis 7, wobei man während des Schrittes (330) zum Verbinden eines Informationsträgers alphanumerische Zeichen mit dem besagten Produkt verbindet.

9. Verfahren nach einem der Ansprüche 1 bis 8, wobei man während des Schrittes (330) zum Verbinden eines Informationsträgers einen Strichcode (260) in zumindest zwei Dimensionen mit dem besagten Produkt verbindet.

10. Verfahren nach einem der Ansprüche 1 bis 9, wobei man während des Schrittes (330) zum Verbinden eines Informationsträgers ein elektronisches Etikett mit dem besagten Produkt verbindet.

11. Verfahren nach einem der Ansprüche 1 bis 10, wobei man während des Schrittes (330) zum Verbinden einen Tintenstrahl-Ausdruck vornimmt.

12. Verfahren nach einem der Ansprüche 1 bis 10, wobei man während des Schrittes (330) zum Verbinden einen Laser-Ausdruck vornimmt.

13. Verfahren nach einem der Ansprüche 1 bis 12, wobei der Schritt (330) zum Verbinden einen Schritt zum Codieren des ersten Inhalts mit einem eindeutigen Schlüssel, speziell für das besagte Produkt umfasst, wobei jede Information, die während eines Verbindungsschrittes zugeordnet wird, dementsprechend unterschiedlich ist.

14. Vorrichtung zum Authentisieren von Produkten aus einer Produktgruppe, folgendes umfassend:
- ein Mittel zum Kennzeichnen eines jeden Produkts zum Erzeugen einer für einen ersten Inhalt repräsentativen Kennzeichnung, die Druckfehler aufweist, und
- ein Mittel zum Verbinden eines Informationsträgers mit dem besagten Produkt, wobei der besagte Informationsträger eine repräsentative Information einerseits über den ersten Inhalt und andererseits über einen Schlüssel trägt,
**dadurch gekennzeichnet, dass** der Schlüssel speziell dem besagten Produkt in der besagten Produktgruppe zugeordnet ist, wobei das Mittel zum Verbinden ein Mittel zum Lesen der Druckfehler umfassenden Kennzeichnung mit einer Kamera umfasst, die vom Mittel zum Kennzeichnen erzeugt wurde,
und dadurch, dass sie ein Mittel zum Codieren der besagten gelesenen Druckfehler umfassenden Kennzeichnung mit dem besagten Schlüssel umfasst, wobei die besagte repräsentative Information dementsprechend für jedes Produkt der besagten Gruppe unterschiedlich ist.

15. Vorrichtung nach Anspruch 14, wobei das Mittel zum Kennzeichnen konfiguriert ist, damit die erzeugte Kennzeichnung Fehlerkorrekturcodes umfasst, um die Anzahl der Kopien zu messen, aus denen die besagte Kennzeichnung hervorgegangen ist, indem man den Verbrauch der besagten Fehlerkorrekturcodes misst.

## Claims

1. Method of authenticating products in a group of products, which comprises, for each product in said group:
- a step (330) of marking said product to produce a mark (205, 225, 245) representative of a first content and having printing errors; and
- a step (330) of association of a data carrier to said product, said data carrier bearing an item of information representative of, firstly, the first content and, secondly, a key
**characterized in that** the key is specifically assigned to said product in said group of products, the association step comprising a step of reading, with a camera, the mark comprising printing errors produced during the marking step,
and **in that** it also comprises a step of encoding said read mark comprising printing errors, with said key, said representative item of information being, as a result, different for each product in said group.

2. Method according to claim 1, wherein, during the marking step (330), the mark produced comprises error correction codes for measuring the number of copies from which said mark has been obtained by measuring the use of said error correction codes.

3. Method according to one of claims 1 or 2, which comprises an encoding step (305) prior to the marking step (330), encoding step during which a message representative of the product is encoded in said first content.

4. Method according to one of claims 1 to 3, wherein, during the marking step (330), dots (210, 230, 250) or dashes are constituted, which contrast with their background, said dots or dashes being representative of the first content.

5. Method according to claim 4, wherein, during the marking step (330), dots (210, 250) or dashes are constituted on an area present on said product.

6. Method according to one of claims 4 or 5, wherein, during the marking step (330), dots (230) are constituted on a separation line of a graphic present on said product.

7. Method according to one of claims 1 to 6, wherein, during the step (330) of association of a data carrier, a bar code is associated to said product.

8. Method according to one of claims 1 to 7, wherein, during the step (330) of association of a data carrier, alphanumeric characters are associated to said product.

9. Method according to one of claims 1 to 8, wherein, during the step (330) of association of a data carrier, a bar code (260) with at least two dimensions is associated to said product.

10. Method according to one of claims 1 to 9, wherein, during the step (330) of association of a data carrier, an electronic tag is associated to said product.

11. Method according to one of claims 1 to 10, wherein, during the association step (330), printing via inkjet is carried out.

12. Method according to one of claims 1 to 10, wherein, during the association step (330), printing via laser impact is carried out.

13. Method according to one of claims 1 to 12, wherein the association step (330) comprises a step of encoding the first content with a unique key specific to said product, each item of information associated during an association step being, as a result, different.

14. Device for authenticating products in a group of products, which comprises:
- a means of marking each product to produce a mark representative of a first content and having printing errors; and
- a means of association of a data carrier to said product, said data carrier bearing an item of information representative of, firstly, the first content and, secondly, a key,
**characterized in that** the key is specifically assigned to said product in said group of products, the association means comprising a means of reading, with a camera, the mark comprising printing errors produced by the marking means,
and **in that** it comprises a means of encoding said read mark comprising printing errors, with said key, said representative item of information being, as a result, different for each product in said group.

15. Device according to claim 14 wherein, the marking means is configured such that the mark produced comprises error correction codes for measuring the number of copies from which said mark has been obtained by measuring the use of said error correction codes.
